# EUROPEAN PATENT SPECIFICATION

(11) **EP 3 112 129 B1**
(45) Date of publication and mention of the grant of the patent: **11.12.2019**
(21) Application number: 15174790.4
(22) Date of filing: 01.07.2015
(51) Int. Cl.: B29C 65/02, B29C 65/78, B29C 63/00, B29C 65/08, B29C 65/16, B29C 65/82

(54) **METHOD FOR THE PRODUCTION OF A VENT**
HERSTELLUNGSVERFAHREN EINER ENTLÜFTUNGSÖFFNUNG
PROCÉDÉ DE FABRICATION D'UN ÉVENT

(43) Date of publication of application: 04.01.2017
(73) Proprietor: W. L. Gore & Associates GmbH, 85640 Putzbrunn (DE)
(72) Inventor: Hils, Peter, 82024 Taufkirchen (DE); Gruber, Andreas, 85567 Grafing (DE)
(74) Representative: HGF Limited

(56) References cited:
- EP-A1- 2 549 175
- WO-A1-2014/122936
- WO-A2-2010/081081
- GB-A- 2 391 513
- US-A- 5 901 867
- US-A1- 2004 176 005

## Description

### Background

Precut membrane or laminate pieces arranged on transport liner to be used in a so-called pick-and-place process are state of the art already for several years. At the production site the transport liner is used in such a way that the pieces are removed (picked) from the liner to be placed at the area of assembly followed by the fixation of the piece, e.g. to cover a venting hole.

Alternatively, a so-called punch-and-weld process can be used. Here, a homogeneous, continuous membrane or laminate material is used during production in such a way, that the material is placed directly over the e.g. venting hole followed by a combined cutting (punch) and welding step, whereas a certain shape is cut out from the homogeneous material and bound to the area of fixation.

Both prior art processes have some disadvantages and consequently, the present invention presents an improved process for the assembly of vents.

The punch-and-weld process does not allow testing the entire material prior to the assembly of the vent. But on the other hand, the process is easy to automate at a production facility.

The pick-and-place process however does offer the possibility to perform a quality control of all pre-cut membrane pieces prior to the vent assembly. On the other hand, the method needs a complicated automation process that requires space for some additional mechanical devices. Moreover, in some circumstances there is a lack of reliability with respect to the strength of adhesive, whereas a weak adhesive results in loss of pieces and a strong adhesive produces errors during the picking step.

Consequently, there is a need for a process that combines the quality features of the pick-and-place method with the ease of production of the punch-and-weld method. The present invention offers the solution to this unmet need.

There are commercial products available for pick-and-place processing, e.g. the product line AVS of W.L. Gore & Associates for automotive applications using pre-cut membranes arranged on low tack liner (AVS 25, 26, 28, 29, 39) as well as laminate discs (AVS 47, 48, 49, 50, 51, 52) that are sold for ultrasonic welding to housings as pressure equalization devices. For punch-and-weld processes several companies sell suited rolled membrane or laminate materials.

US 2004/176005 describes a method bonding together textile elements through the use of an adhesive element and the application of heat and pressure. WO 2014/122936 describes a technology which is capable of easily positioning a bonding member relative to a belt-shaped member being conveyed. GB 2391513 discloses a method of making laminate comprising providing a preformed plastics film shape releasably adhered or bonded to a release liner. US 5,901,867 discloses a membrane that is carried on a structural support which may vary from a fabric type backing to a porous plastic stem. WO 2010/081081 describes caps having porous elements that act as a vent to facilitate cooling of hot fluids stored in containers. EP 2 549 175 discloses a vent member including a support body having a vent passage between an interior space and an exterior space of a housing and a gas-permeable membrane disposed on the support body to close the vent passage on the side of the exterior space. EP 2549175 discloses a method for the production of a vent comprising the steps of: providing a plurality of pieces made of liquid proof and gas permeable material, placing one of said plurality of pieces on a through hole of a device to be vented in such a way that one of said plurality of pieces is completely covering said through hole, and applying energy to said plurality of pieces in such a way that a welding connection surrounding said through hole is established between said piece and said device.

### Summary

One aspect of the present invention is a method for the production of a vent comprising the steps of
a) providing an assembly comprising a plurality of pieces (4) made of liquid proof and gas permeable material removably attached on one side of a support material (2),
b) placing said assembly on a through hole (6) of a device (5) to be vented in such a way that one of said plurality of pieces (4) is completely covering said through hole (6), whereas said support material (2) is facing away from said through hole (6),
c) applying energy (1) to said placed assembly in such a way that a welding connection (7) surrounding said through hole (6) is established between said piece (4) and said device (5), and
d) removing said support material (2).

When the vent of the present invention is produced, the only air exchange between the inside and the outside of the device (5) to be vented should be possible via the liquid proof and gas permeable material covering the through hole (6) of the device (5). Therefore, it is necessary for the welding connection surrounding the through hole (6) to provide a liquid proof and gas impermeable seal. Moreover, this welding connection surrounds the through hole (6) of the support member without substantially affecting the air exchange via the liquid proof and gas permeable material.

Throughout the present invention the support material (2) is not only a material to assemble and arrange the plurality of material pieces (4), but also a material that is still present during the formation of the welding connection and in some embodiments even after the welding to provide protection until final use. In other words and in comparison to state of the art processes, the support material (2) of the assembly according to the present invention functions not only as transport material for the plurality of pieces (4) as known from the pick-and-place process, but also as production liner as known from the punch-and-weld process, whereas the respective roll good can be used in a continuous production process.

Throughout this application the term "liquid proof and gas permeable material" means material that is impermeable to liquids such as aqueous solution as well as permeable for gaseous material such as air and preferably water vapor. Consequently, the material is able to equalize the pressure in a compartment with the outside, while at the same time avoid moisture and dirt to ingress. Said "pieces made of liquid proof and gas permeable material" are also called "material pieces" throughout the present invention.

The term "removably attached" is used to emphasize that the plurality of material pieces (4) stick to the support material (2) temporarily. In other words, the material pieces (4) are attached to the support material (2), but can be removed again by applying a respective mechanical force without damaging the material pieces (4).

As mentioned before, the vent of the present invention is suitable for equalizing the pressure difference between the inside and the outside of a hollow device (5) via a through hole (6) within the enclosure of said device (5) to be vented.

At the end of the process the material pieces (4) are welded to the device (5) and the support material (2) must be removed such that the properties of the material pieces (4) are activated. Consequently, the support material (2) with the plurality of material pieces (4) must be arranged in such a way that the support material (2) is facing away from said device (5) and consequently, at least one of the material pieces (4) is facing the device (5).

With one of the plurality of material pieces (4) being in physical contact with the device (5) the welding is induced by applying energy, whereas the energy is sufficient to obtain a temporarily local melting of at least the device material.

### Brief Description of the Figures

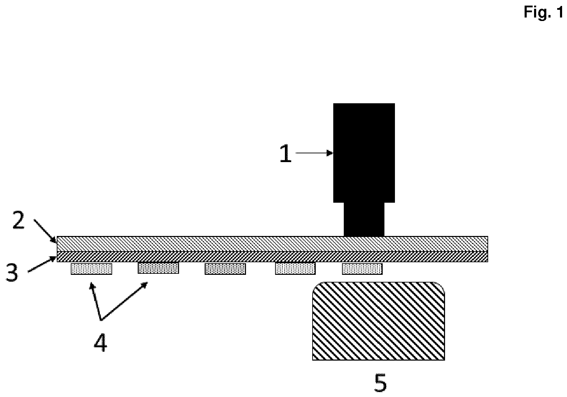

- **Fig. 1:**: Schematic drawing of the production set-up according to the present invention.

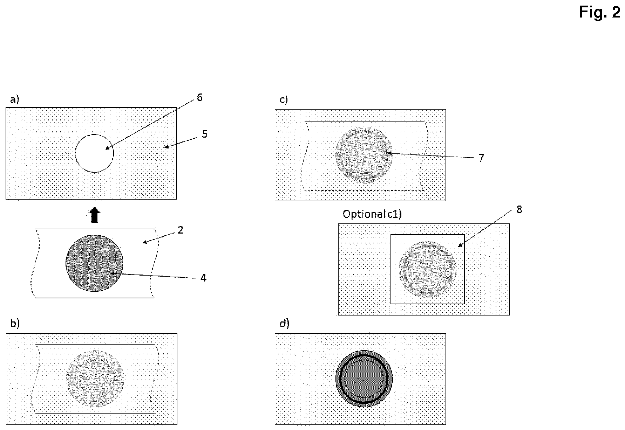

- **Fig. 2:**: Schematic illustration of the method according to the present invention: a) showing a cutout of a support material (2) having on material piece (4) as well as housing of a device (5) having a through hole (6), b) the cutout of a support material (2) is placed upside down on the device (5), c) a welding connection (7) is established between the material piece (4) and the device (5) below the support material (2), c1) optional cutting step, such that a part of the support material can remain on the material piece (4) as protective layer (8), and d) the support material (2) is removed.
- **Fig. 3:**: Picture of welding performed with a state of the art pick-and-place process (left) and with the process according to the present invention (right).

### Detailed Description

One aspect of the present invention is a method for the production of a vent comprising the steps of
a) providing an assembly comprising a plurality of pieces (4) made of liquid proof and gas permeable material removably attached on one side of a support material (2),
b) placing said assembly on a through hole (6) of a device (5) to be vented in such a way that one of said plurality of pieces (4) is completely covering said through hole (6), whereas said support material (2) is facing away from said through hole (6),
c) applying energy (1) to said placed assembly in such a way that a welding connection (7) surrounding said through hole (6) is established between said piece (4) and said device (5), and
d) removing said support material (2).

As mentioned above, the present invention is based on the surprising finding that the support material (2) need not to be removed prior to a welding process and consequently, that the benefits of pre-prepared material pieces (4) that were used in the past only for pick-and-place processes can be combined with the processing benefits of roll good materials that were used in the past in the punch-and-weld process.

Therefore, pre-prepared pieces (4) made of liquid proof and gas permeable material can be arranged on a support material (2) after an extensive quality check, whereas said support material (2) is preferably flexible enough to be rolled up towards enhanced transportability.

Because the welding connection can be induced by applying energy with the support material (2) still present, the production process can be started directly by unrolling the assembly in such a way that the pieces (4) of liquid proof and gas permeable material are guided by the support material (2) to be placed on the intended area of the device, whereas the pieces (4) of liquid proof and gas permeable material are between the support material (2) and the device (5). Finally, the support material (2) can be removed, which is an easily automated process.

Several alternatives for step a) of providing the assembly are known to the person skilled in the art. In one embodiment, belts of the support material (2) and the gas permeable, liquid proof material run in parallel at a defined distance, whereas punch devices will separate one of the plurality of material piece from said belt and bringing them in contact with the support material (2). Alternatively, the support material (2) and the gas permeable, liquid proof material are first attached to each other to form a composite belt and after a controlled cutting of only the gas permeable, liquid proof material to define the plurality of material pieces (4), the rest of the gas permeable, liquid proof material belt is removed.

A preferred method according to the invention comprises the additional steps of
e) placing said assembly on another through hole of the same or another device (5) in such a way that another piece of said plurality of pieces (4) is completely covering said another through hole (6), whereas said support material (2) is facing away from said through hole (6),
f) applying energy (1) to said placed assembly in such a way that a welding connection surrounding said another through hole (6) is established between said another piece and said device (5), and
g) removing said support material (2).

In a more preferred method according to the present invention, steps e) to g) are repeated, preferably until all pieces (4) are used to cover through holes (6).

As said assembly comprises a plurality of material pieces (4), the process steps can be repeated to successively cover a plurality of through holes (6). Depending on the design of the production setup and the devices (5) to be covered it is possible to arrange the assembly in such a way that two or more of the material pieces (4) can be welded to different devices or to more through holes (6) of the same device (5) at the same time.

The present invention is suitable for material pieces (4) having extensions of around 0.1 to 60 mm. The actual form of the material pieces (4) is irrelevant, but it can be said that the present invention improves especially the pick-and-place process in such a way that smaller material pieces (4) can be handled.

In yet another preferred method according to the present invention, said pieces (4) are porous or non-porous membrane or laminate pieces.

In still another preferred method according to the present invention, said membrane pieces are made of polytetrafluoroethylene (PTFE), expanded PTFE (ePTFE), polyethylene terephthalate (PET), polycarbonate (PC) or polyethylene (PE).

Membranes made of ePTFE are porous and allow air and vapors to pass, but restrict the passage of larger substances like dust, dirt and liquid water. ePTFE membranes can be provided as uni- or bi-directionally stretched material.

A further advantage of the present invention is that thinner material pieces (4) can be used as compared to methods known from the state of the art. With respect to the pick-and-place process, a certain thickness of the material pieces (4) is required such that the material pieces (4) survive the mechanical stress of the placing process. But also for the punch-and-weld process the roll good material needs to have a certain thickness such that the material can be processed.

For the present invention, the mechanical stability required for the processing is to a certain extent provided by the support material (2) and consequently, the material pieces (4) that aren't separate from any support throughout the entire process can be more fragile.

In another more preferred method according to the present invention, said membrane pieces have a thickness of between 5 µm and 0.5 mm.

As a comparison, the thickness of membrane pieces suitable for a pick-and-place process (see e.g. the product line AVS (AVS 25, 26, 28, 29, 39) of W.L. Gore & Associates) is typically around 0.2 mm.

In yet another preferred method according to the present invention, said laminate pieces comprise at least one membrane piece made of PTFE, ePTFE, polyethylene terephthalate (PET), polycarbonate (PC) or polyethylene (PE) laminated to at least one backer material, preferably said backer material is non-woven PE, PA or PET.

A laminate is a multi-layer construction throughout the present invention. Laminates can be made from two or more different membranes as well as from membranes bound to so-called backer materials to change properties like durability, penetration resistance, stiffness etc.

As backer material different materials can be laminated to a membrane to improve the functionality of the membrane. Typically, the backer material acts as mechanical support to improve puncture strength and stiffness. Consequently, adding a backer material is reasonable for thinner membranes.

In addition, a backer material can be selected to act as adhesive for use in welding applications to improve the welding connection. During a welding process the backer material will normally melt as well to provide a strong connection to the device (5). This will happen even if the backer material is preferably chosen to be transparent for the laser light in case of laser welding, because the backer material will be heated indirectly via the contact with the heated housing material.

With respect to laminates comprising membranes and backer materials at least two different set-ups are possible. First of all, one backer material can be laminated to one membrane, whereas the backer material as well as the membrane side can be oriented towards the device to establish the welding connection.

As both the membranes and the backer materials can be welded to e.g. thermoplastics, it is possible to orient the material pieces (4) depending on the respective application. In case of ePTFE, it is reasonable to arrange the laminate pieces in such a way that the membrane is facing that side of the vent with potential fluid contact. Consequently, for automotive venting, the membrane should face the outside with humidity and dirt, whereas for packaging vents the membrane should face the inside of a compartment containing the stored fluid.

Alternatively, a backer layer can be laminated between 2 membrane layers (e.g. the products AVS 47, 48, 49, 50, 51 or 52 of the AVS product line of W.L. Gore & Associates) or a membrane may have backer materials on both sides, whereas said backer materials can be the same or of a different kind.

In another more preferred method according to the present invention, said laminate pieces have a thickness of between 100 µm and 0.5 mm.

In still another preferred method according to the present invention, said pieces (4) are hydrophobic and/or oleophobic.

Depending on the application of the vent said material pieces (4) may be equipped with different properties. Said properties can be provided by selection of materials that have those properties already or by certain treatments of materials to add those properties. If e.g. PTFE is used as membrane material, the membrane pieces have hydrophobic properties already. Moreover, treatments of PTFE are known that can add oleophobic properties to PTFE, too.

Another preferred method according to the present invention is a method, whereas said support material (2) is a polymeric material, preferably made of polyethylene terephthalate (PET), polyamide (PA), polycarbonate (PC) or polyethylene (PE).

With respect to the support material (2) different materials can be used and the person skilled in the art will know what material to use for the respective process without deviating from the teaching of the present invention.

It is preferred to use flexible support material (2) as this material can be used as roll good with benefits for transport as well as for process automation. Consequently, the support material (2) is preferably made of polymeric or plastic material.

Moreover, depending on the way that energy is applied to the assembly the support material (2) should provide some other properties. If the welding connection is induced via laser light that is preferably applied through the support material (2), said support material must be substantially transparent for the wavelength of the used laser. In case of welding via ultrasound that is preferably applied through the support material (2), it is important that the support material (2) has sufficient mechanical stability to withstand the pressure of the sonotrode. As welding occurs based on heat, it is preferred that the support material (2) has a relatively high temperature stability, because the welding connection should be established between the device (5) and the material piece (4), and not between the material piece (4) and the support material (2).

In another more preferred method according to the present invention, said support material (2) has a thickness of between 10 µm and 0.2 mm, preferably between 10 µm and 0.1 mm, and more preferably between 10 µm and 50 µm.

With respect to the thickness of the support material (2), a minimum thickness of around 10 µm is necessary to provide sufficient tensile strength and stability against deformation to stand the mechanical stress of being used as a production liner. On the other hand, it must be reasonably thin such that the support material (2) can still be used as roll good with the mentioned benefits towards transport. Moreover, for the preferred embodiments requiring energy transport through the support material (2), increase in thickness has a negative impact, too.

Yet another more preferred method according to the present invention is a method, whereas said plurality of pieces (4) are arranged on one side of a support material (2) using adhesive (3).

Even though there are material combinations that don't require an additional adhesive (3) such that the material pieces (4) stick to the support material (2), it is preferred to use an adhesive (3) providing a well-defined adhesive strength.

Therefore, in another preferred method according to the present invention, said adhesive (3) has an adhesive strength of 1-8 N/25 mm according to the FINAT test FTM 2.

With respect to the properties of the adhesive (3) suitable for the respective embodiments of the present invention there are several aspects that need to be balanced.

First of all, the strength of the adhesive (3) must be strong enough to keep the plurality of material pieces (4) in place throughout transportation and production. On the other hand, the adhesive (3) can't be too strong as the support material (2) need to be removed again at some later point of the processing without damaging the material pieces (4).

Moreover, the adhesive (3) needs to have a minimized effect on the properties of the liquid proof and gas permeable pieces (4). Consequently, the adhesive (3) is preferably applied to the support material (2) and after contact with the support material (2) only small amounts of adhesive residuals should remain on the material pieces (4). As the welding connection is made with the adhesive (3) on the support material (2) still present, the behavior of the adhesive (3) during application of welding energy needs to be considered. A preferred adhesive (3) according to the present invention has a low viscosity even at elevated temperatures such that the diffusion of adhesive (3) from the area of welding into the active area of the vent is small. The loss in active area could be maintained at below 5 % throughout the present invention, whereas samples without any loss were obtained, too.

Preferred adhesives (3) for the present invention are acrylic or silicon adhesives, whereas the adhesive (3) can be provided as a continuous layer on the entire support material (2) or only at areas where material pieces (4) are intended to be placed. In a preferred embodiment, an adhesive layer (3) is provided on the support material (2) having holes, said holes are designed to be smaller than the material pieces (4) to be welded. In this case, the material pieces (4) can be placed on the support material (2) to span said holes of the adhesive layer (3) such that the material pieces (4) are still attached to the support, but the area of the material piece being in contact with adhesive (3) and to some extent contaminated by the adhesive (3) is reduced.

If laser light is used to generate the welding connection, whereas the light has to pass the support material (2) as well as the adhesive (3), it is preferred to use a adhesive (3) that is substantially transparent to the used wavelength.

A number of commercial so-called low tack liners turned out to be suitable for the present invention. As examples, the following PET (polyethylene terephthalate) products having different combinations of plastic materials and adhesives can be used for the present invention: PPI 3603, PPI 287, PPI SP-139, PPI SP-761E (all from PPI Adhesive products GmbH, post box 1224, D-51780 Lindlar) or RelinkTC1292 (Biolink Gesellschaft für Verbindungstechnologien mbH, Brunnenweg 38, D-83666 Waakirchen).

In another preferred embodiment of the method according to the present invention, said support material (2) has holes, said holes are arranged relative to said pieces (4) in such a way that said pieces (4) circumferentially overlap said holes.

In this preferred embodiment according to the present invention the support material (2) has holes that are smaller than the material pieces (4) to be welded. Such a support material (2) offers the benefit that not the entire material piece (4) is in contact with adhesive (3), similar to the embodiment described above having a adhesive layer (3) with holes.

Moreover, a support material (2) having holes can be designed to place a sonotrode for ultrasonic welding directly on the material piece and consequently, the energy need not to be applied via the support material (2). For this embodiment, the hole in the support material (2) must be larger than the hole in the device (5), such that the material piece has some accessible overlap with the device material that the sonotrode can use to create the welding line. Consequently, after removing the support material (2) there will be a larger amount of the material piece (4) outside of said welding line that is not bound to the device (5).

Another preferred method according to the present invention is a method, whereas said device (5) is constructed such that at least the material surrounding said through hole (6) is made of thermoplastic material, preferably polybutylene terephthalate (PBT), acrylonitrile butadiene styrene (ABS), polycarbonate (PC) or high-density polyethylene (HD-PE) with or without filler material.

The welding connection is established by temperature induced local melting of at least one of the two components to be connected. Consequently, the material of the device (5) to be vented and the material of the plurality of material pieces (4) to be welded to said device (5) must match each other such that a welding connection can be obtained.

With at least the contact area to the material pieces (4) made of thermoplastic material, said area can be heated to a temporary fluid connection to form a liquid proof and gas impermeable seal after cooling below the phase transition again.

Preferably, the entire housing of the device (5) to be vented is made of thermoplastic material.

As indicated already above, in a preferred method according to the present invention, said welding connection is made by ultrasound or laser light.

In yet another more preferred method according to the present invention, said energy is applied through said support material (2).

If the energy is applied via laser light through said support material (2), not only the support material (2), but preferably also the material pieces (4) should be substantially transparent to the used wavelength such that only the device material is heated.

As the support material (2) as well as the material pieces (4) have certain absorbing properties, the welding parameters may need to be adapted compared to welding without the support material (2) in between. Consequently, the energy e.g. needs to be slightly higher to compensate the loss along the way.

Another preferred method according to the present invention comprises the additional step of cutting said support material (2) circumferential said welding connection such that part of the support material (2) remains as protective layer (8), whereas said additional step is performed after step c and/or step f as well as prior to removing said support material (2) in step d) or g).

Within this preferred embodiment, the support material (2) provides yet another function, namely that of a protective layer for the material pieces (4). If the material pieces (4) are welded directly to the final product that should be used immediately, this additional step does not provide a lot of benefits. But if the material pieces (4) are welded to intermediate products that themselves are going to be shipped further, it makes sense to maintain a part of the support material (2) on the welded material piece as long as the intermediate product is assembled with the final product.

With respect to the cutting step as well as with respect to the removing step according to the method of the present invention, these are standard processes known to the person skilled in the art that can also be performed in automated processes.

### Example

In the following, the process according to the present invention is illustrated using plastic discs to represent the through hole within the enclosure of a device to be vented. For this example, the plastic discs with a thickness of 2.3 mm are made of PBT-30 (polybutylene terephthalate), whereas the discs have a flat surface representing the welding area and an outer diameter of 28 mm with a 6 mm circular hole in the center of the disc.

As material pieces to be welded to the plastic disc ePTFE membranes were used that are made of 100% expanded PTFE (ePTFE) having a thickness of approx. 200 µm and a diameter of 14 mm (AVS 29, commercially available from W.L. GORE & Associates GmbH (Hermann-Oberth-Strasse 26, 85640 Putzbrunn, part number AMP200023-00140).

Said ePTFE pieces are arranged on a PPI 3603 low tack adhesive tape (PPI Adhesive products GmbH, post box 1224, 51780 Lindlar) as support material for further processing.

To generate the welding connection between the ePTFE pieces and the plastic discs an ultrasonic PS-Dialog Welder from Herrmann Ultrasonics was used (Herrmann Ultrasonics, Descostr. 3-9, 76307 Karlsbad, Germany). The welder was used with a circular sonotrode having an outer diameter of 13 mm and an inner diameter of 11 mm at 35 kHz with 1000 W.

After the welding process a "burst pressure" test was performed to qualify the strength of the weld. Water pressure is applied on the opposite side of the welded material, whereas the water pressure is increased gradually and electronically controlled at a constant rate of 5 bar / minute. At the point when the welding connection breaks, the burst pressure is recorded.

To compare the method according to the present invention with the pick-and-place process known from the state of the art two sets of welding experiments were performed.

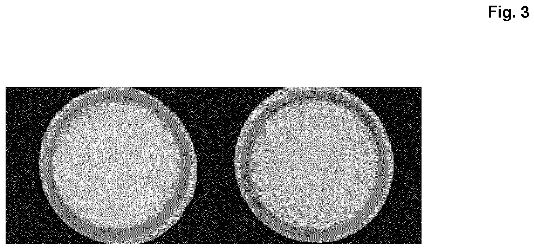

As a reference, a standard pick-and-place process was performed using three 14 mm AM1XX membranes attached to a PPI-3603 liner in an automated process. Afterwards, the three discs were removed by hand from the liner and welded to PBT-30 plastic discs with a circular sonotrode of 13 mm outer and 11 mm inner diameter. The parameters of the ultrasonic welder were set to a welding time 0.25 s, dwell time 0.5 s, amplitude 75%, weld force and hold force 70 N. Their burst pressure was 3.99 bars, 3.85 bars and 4.7 bar respectively (see left picture of figure 3).

In comparison, another PPI-3603 liner also with three 14 mm AM1XX membranes was used according to the process of the present invention. Here, the liner was cut in three pieces with one disc on each to be placed on a plastic discs, whereas the ePTFE membrane was facing towards the plastic discs and the liner facing upwards, towards the sonotrode. The welding was performed with the same settings as before. Finally, the adhesive tape was peeled off and two of the samples were tested for burst pressure. The recorded pressures were 4.58 and 4.72 bars, respectively (see right picture of figure 3).

In summary, the example shows that the new process results in similar welding results as compared to the old pick-and-place process. Looking closer at the welding connection, it is apparent that the homogeneity of the weld is improved, if the process according to the present invention is used. Without being bound by theory, it is believed that the support material between sonotrode and the PTFE pieces levels the energy distribution.

## Claims

1. Method for the production of a vent comprising the steps of
a) providing an assembly comprising a plurality of pieces (4) made of liquid proof and gas permeable material removably attached on one side of a support material (2),
b) placing said assembly on a through hole (6) of a device (5) to be vented in such a way that one of said plurality of pieces (4) is completely covering said through hole (6), whereas said support material (2) is facing away from said through hole (6),
c) applying energy (1) to said placed assembly in such a way that a welding connection (7) surrounding said through hole (6) is established between said piece (4) and said device (5), and
d) removing said support material (2).

2. Method according to claim 1 comprising the additional steps of
e) placing said assembly on another through hole (6) of the same or another device (5) in such a way that another piece of said plurality of pieces (4) is completely covering said another through hole (6), whereas said support material (2) is facing away from said through hole (6),
f) applying energy (1) to said placed assembly in such a way that a welding connection surrounding said another through hole (6) is established between said another piece and said device (5), and
g) removing said support material (2).

3. Method according to claims 1 or 2, whereas said pieces (4) are porous or non-porous membrane or laminate pieces.

4. Method according to claim 3, whereas said membrane pieces are made of polytetrafluoroethylene (PTFE), expanded PTFE (ePTFE), polyethylene terephthalate (PET), polycarbonate (PC) or polyethylene (PE).

5. Method according to claims 3-4, whereas said membrane pieces have a thickness of between 5 µm and 0.5 mm.

6. Method according to claim 3, whereas said laminate pieces comprise at least one membrane piece made of PTFE, ePTFE, polyethylene terephthalate (PET), polycarbonate (PC) or polyethylene (PE) laminated to at least one backer material, preferably said backer material is non-woven PE, PA or PET.

7. Method according to claim 3 or 6, whereas said laminate pieces have a thickness of between 100 µm and 0.5 mm.

8. Method according to claims 1 to 7, whereas said support material (2) is a polymeric material, preferably made of polyethylene terephthalate (PET), polyamide (PA), polycarbonate (PC) or polyethylene (PE).

9. Method according to claims 1 to 8, whereas said support material (2) has a thickness of between 10 µm and 0.2 mm, preferably between 10 µm and 0.1 mm, and more preferably between 10 µm and 50 µm.

10. Method according to claims 1 to 9, whereas said plurality of pieces (4) are arranged on one side of a support material (2) using adhesive (3).

11. Method according to claim 10, whereas said adhesive (3) has an adhesive strength of 1-8 N/25 mm according to the FINAT test FTM 2.

12. Method according to claims 1 to 11, whereas said support material (2) has holes, said holes are arranged relative to said pieces (4) in such a way that said pieces (4) circumferentially overlap said holes.

13. Method according to claims 1 to 12, whereas said welding connection is made by ultrasound or laser light.

14. Method according to claim 13, whereas said energy is applied through said support material (2) in step d) or g).

15. Method according to claims 1 to 14 comprising the additional step of cutting said support material (2) circumferential said welding connection such that part of the support material (2) remains as protective layer (8), whereas said additional step is performed after step c and/or step f as well as prior to removing said support material (2).

## Patentansprüche

1. Verfahren zum Herstellen einer Entlüftungsöffnung, umfassend die folgenden Schritte:
a) Bereitstellen einer Anordnung, umfassend mehrere Stücke (4), die aus flüssigkeitsdichtem und gasdurchlässigem Material gefertigt sind, das entfernbar auf einer Seite eines Trägermaterials (2) angebracht ist,
b) Platzieren der Anordnung auf einem Durchgangsloch (6) einer zu entlüftenden Vorrichtung (5) derart, dass eines der mehreren Stücke (4) das Durchgangsloch (6) vollständig abdeckt, wobei das Trägermaterial (2) von dem Durchgangsloch (6) wegweist,
c) Anlegen von Energie (1) an die platzierte Anordnung derart, dass eine Schweißverbindung (7) um das Durchgangsloch (6) zwischen dem Stück (4) und der Vorrichtung (5) entsteht, und
d) Entfernen des Trägermaterials (2).

2. Verfahren nach Anspruch 1, umfassend die folgenden zusätzlichen Schritte:
e) Platzieren der Anordnung auf einem anderen Durchgangsloch (6) derselben oder einer anderen Vorrichtung (5) derart, dass ein anderes Stück der mehreren Stücke (4) das andere Durchgangsloch (6) vollständig abdeckt, wobei das Trägermaterial (2) von dem Durchgangsloch (6) wegweist,
f) Anlegen von Energie (1) an die platzierte Anordnung derart, dass eine Schweißverbindung um das andere Durchgangsloch (6) zwischen dem anderen Stück und der Vorrichtung (5) entsteht, und
g) Entfernen des Trägermaterials (2).

3. Verfahren nach den Ansprüchen 1 oder 2, wobei die Stücke (4) poröse oder nichtporöse Membran- oder Laminatstücke sind.

4. Verfahren nach Anspruch 3, wobei die Membranstücke aus Polytetrafluorethylen (PTFE), expandiertem PTFE (ePTFE), Polyethylenterephthalat (PET), Polycarbonat (PC) oder Polyethylen (PE) gefertigt sind.

5. Verfahren nach den Ansprüchen 3-4, wobei die Membranstücke eine Dicke von zwischen 5 µm und 0,5 mm aufweisen.

6. Verfahren nach Anspruch 3, wobei die Laminatstücke mindestens ein Membranstück umfassen, das aus PTFE, ePTFE, Polyethylenterephthalat (PET), Polycarbonat (PC) oder Polyethylen (PE) gefertigt ist, das auf mindestens ein Unterlagenmaterial laminiert ist, wobei es sich bei dem Unterlagenmaterial bevorzugt um ein PE-, PA- oder PET-Vlies handelt.

7. Verfahren nach Anspruch 3 oder 6, wobei die Laminatstücke eine Dicke von zwischen 100 µm und 0,5 mm aufweisen.

8. Verfahren nach den Ansprüchen 1 bis 7, wobei das Trägermaterial (2) ein Polymermaterial ist, das bevorzugt aus Polyethylenterephthalat (PET), Polyamid (PA), Polycarbonat (PC) oder Polyethylen (PE) gefertigt ist.

9. Verfahren nach den Ansprüchen 1 bis 8, wobei das Trägermaterial (2) eine Dicke von zwischen 10 µm und 0,2 mm, bevorzugt zwischen 10 µm und 0,1 mm und noch bevorzugter zwischen 10 µm und 50 µm aufweist.

10. Verfahren nach den Ansprüchen 1 bis 9, wobei die mehreren Stücke (4) auf einer Seite des Trägermaterials (2) mittels Klebstoff (3) angeordnet sind.

11. Verfahren nach Anspruch 10, wobei der Klebstoff (3) eine Klebkraft von 1-8 N/25 mm gemäß der FINAT-Prüfung FTM 2 aufweist.

12. Verfahren nach den Ansprüchen 1 bis 11, wobei das Trägermaterial (2) Löcher aufweist, wobei die Löcher im Verhältnis zu den Stücken (4) derart angeordnet sind, dass sich die Stücke (4) umlaufend mit den Löchern überlappen.

13. Verfahren nach den Ansprüchen 1 bis 12, wobei die Schweißverbindung mittels Ultraschall oder Laserlicht hergestellt wird.

14. Verfahren nach Anspruch 13, wobei die Energie durch das Trägermaterial (2) in Schritt d) oder g) angelegt wird.

15. Verfahren nach den Ansprüchen 1 bis 14, umfassend den zusätzlichen Schritt zum Schneiden des Trägermaterials (2) umlaufend um die Schweißverbindung derart, dass ein Teil des Trägermaterials (2) als Schutzschicht (8) zurückbleibt, wobei der zusätzliche Schritt nach Schritt c und/oder Schritt f sowie vor dem Entfernen des Trägermaterials (2) durchgeführt wird.

## Revendications

1. Méthode pour la production d'un évent comprenant les étapes suivantes :
a) mise en place d'un ensemble comprenant une pluralité de pièces (4) réalisées avec un matériau imperméable aux liquides et perméable aux gaz, fixées de façon amovible sur un côté d'un matériau support (2),
b) positionnement dudit ensemble sur un orifice traversant (6) d'un dispositif (5) à évacuer, de sorte qu'une de ladite pluralité des pièces (4) recouvre de façon intégrale ledit orifice traversant (6), alors que ledit matériau support (2) est tourné dans la direction opposée audit orifice traversant (6),
c) application d'énergie (1) sur ledit ensemble positionné, de façon à établir un raccordement de soudage (7) entourant ledit orifice traversant (6) entre ladite pièce (4) et ledit dispositif (5), et
d) enlèvement dudit matériau support (2).

2. Méthode selon la revendication 1, comprenant les étapes additionnelles suivantes :
e) positionnement dudit ensemble sur un autre orifice traversant (6) du même, ou d'un autre, dispositif (5), de sorte qu'une autre pièce de ladite pluralité des pièces (4) recouvre de façon intégrale ledit un autre orifice traversant (6), alors que ledit matériau support (2) est tourné dans la direction opposée audit orifice traversant (6),
f) application d'énergie (1) sur ledit ensemble mis en place de façon à établir un raccordement de soudage entourant ledit un autre orifice traversant (6) entre ladite une autre pièce et ledit dispositif (5), et
g) enlèvement dudit matériau support (2).

3. Méthode selon la revendication 1 ou 2, lesdites pièces (4) étant des membranes poreuses ou non poreuses ou des pièces stratifiées.

4. Méthode selon la revendication 3, lesdites pièces à membrane étant réalisées en polytétrafluoroéthylène (PTFE), en PTFE expansé (ePTFE), en polyéthylène téréphthalate (PET), en polycarbonate (PC) ou en polyéthylène (PE).

5. Méthode selon les revendications 3-4, lesdites pièces à membrane mesurant de 5 µm à 0,5 mm d'épaisseur.

6. Méthode selon la revendication 3, lesdites pièces stratifiées comprenant au moins une pièce à membrane réalisée en PTFE, en ePTFE, en polyéthylène téréphthalate (PET), en polycarbonate (PC) ou en polyéthylène (PE) stratifié sur au moins un matériau de support, le matériau de support étant, de préférence, du PE, du PA ou du PET non tissés.

7. Méthode selon la revendication 3 ou 6, lesdites pièces stratifiées mesurant de 100 µm à 0,5 mm d'épaisseur.

8. Méthode selon les revendications 1 à 7, ledit matériau de support (2) étant réalisé avec un matériau polymère, de préférence en polyéthylène téréphthalate (PET), en polyamide (PA), en polycarbonate (PC) ou en polyéthylène (PE).

9. Méthode selon les revendications 1 à 8, l'épaisseur dudit matériau de support (2) mesurant de 10 µm à 0,2 mm, de préférence de 10 µm à 0,1 mm, mieux encore de 10 µm à 50 µm.

10. Méthode selon les revendications 1 à 9, ladite pluralité de pièces (4) étant agencée sur un côté d'un matériau de support (2) en utilisant un adhésif (3).

11. Méthode selon la revendication 10, ledit adhésif (3) présentant un pouvoir adhésif de 1-8 N/25 mm selon la méthode d'essai FINAT n° 2 (FTM 2).

12. Méthode selon les revendications 1 à 11, ledit matériau de support (2) possédant des orifices, lesdits orifices étant agencés relativement auxdites pièces (4) de sorte que lesdites pièces (4) chevauchent circonférentiellement lesdits orifices.

13. Méthode selon les revendications 1 à 12, ledit raccordement de soudage étant réalisé aux ultrasons ou par rayonnement laser.

14. Méthode selon la revendication 13, ladite énergie étant appliquée par le biais dudit matériau de support (2) aux étapes (d) ou (g).

15. Méthode selon la revendication 1 à 14, comprenant l'étape additionnelle de la coupe dudit matériau de support (2) circonférentiellement audit raccordement de soudage, de façon à maintenir une partie du matériau de support (2) en tant que couche de protection (8), alors que ladite étape supplémentaire est effectuée après l'étape c et/ou l'étape f, ainsi que préalablement à l'enlèvement dudit matériau support (2).
